# EUROPÄISCHE PATENTSCHRIFT

(11) **EP 1 387 935 B1**
(45) Veröffentlichungstag und Bekanntmachung des Hinweises auf die Patenterteilung: **19.07.2006**
(21) Anmeldenummer: 01995609.3
(22) Anmeldetag: 18.12.2001
(51) Int. Cl.: F02D 9/10, F02D 11/10, F02D 41/00

(54) **VERFAHREN UND VORRICHTUNG ZUR ERMITTLUNG DES DRUCKS IN EINER MASSENSTROMLEITUNG VOR EINER DROSSELSTELLE**
METHOD AND DEVICE FOR DETERMINING THE PRESSURE IN A MASS FLOW LINE UPSTREAM FROM A THROTTLE POINT
PROCEDE ET DISPOSITIF POUR DETERMINER LA PRESSION DANS UNE CONDUITE A DEBIT MASSIQUE EN AMONT D'UN POINT D'ETRANGLEMENT

(30) Priorität: 11.05.2001 DE 10123034
(43) Veröffentlichungstag der Anmeldung: 11.02.2004
(73) Patentinhaber: ROBERT BOSCH GMBH, 70442 Stuttgart (DE)
(72) Erfinder: WILD, Ernst, 71739 Oberriexingen (DE); PFITZ, Manfred, 71665 Vaihingen (DE)
(86) Internationale Anmeldenummer: PCT/DE2001/004739
(87) Internationale Veröffentlichungsnummer: WO 2002/092983

(56) Entgegenhaltungen:
- EP-A- 0 440 135
- DE-A- 19 740 914
- US-A- 4 582 031
- US-A- 4 951 647
- US-A- 5 611 309
- US-A- 5 889 205

## Beschreibung

### Stand der Technik

Die Erfindung betrifft ein Verfahren und eine Vorrichtung zur Ermittlung des Drucks in einer Massenstromleitung vor einer Drosselstelle.

Eine derartige Vorgehensweise ist aus der DE-A 197 40 914 bekannt. Dort wird am Beispiel des Ansaugsystems einer Brennkraftmaschine eine Vorgehensweise beschrieben, mit deren Hilfe der Druck in der Ansaugleitung vor der Drosselklappe der Brennkraftmaschine berechnet werden kann. Es wird unter Zuhilfenahme physikalischer Zusammenhänge im Ansaugrohr der Druck vor der Drosselklappe abgeschätzt. Auf eine Messung des Drucks kann daher verzichtet werden. Beim dort beschriebenen System wird zur Berechnung der Luftströmung zur Brennkraftmaschine, insbesondere der Zylinderfüllung, abhängig vom Drosselklappenwinkel der aktuelle Massenstrom über die Drosselklappe berechnet. Dieser wird mit Faktoren, die abhängig von der Ansauglufttemperatur, vom Druck vor der Drosselklappe und vom Druck nach der Drosselklappe abhängig ist, korrigiert. Dadurch werden die aktuelle Luftdichtung und die aktuelle Strömungsgeschwindigkeit berücksichtigt. Die Luftdichtekorrektur stützt sich dabei auf die gemessene Lufttemperatur vor der Drosselklappe (Ansauglufttemperatur) und dem Druck vor der Drosselklappe, während der Faktor, der die aktuelle Strömungsgeschwindigkeit berücksichtigt, Ausgangsgröße einer Kennlinie ist, die mit dem Druckverhältnis aus Saugrohrdruck und dem Druck vor der Drosselklappe adressiert wird.

Der auf diese Weise berechnete aktuelle Massenstrom an der Drosselstelle wird durch die Drehzahl und eine Konstante dividiert. Ergebnis ist eine Luftmasse, die bezogen ist auf eine Normluftmasse im Brennraum, die während eines Segments, d.h. während eines bestimmten Kurbelwellenwinkels, über die Drosselklappe ins Saugrohr fließt (relative Luftmasse). Danach wird eine Differenz zwischen dieser berechneten Luftmasse und der letztendlich durch das beschriebene Modell berechneten, in den Brennraum geflossenen relativen Luftmasse gebildet. Diese Differenz stellt die bezogene Luftmassenänderung im Saugrohr dar. Sie wird einem Integrator zugeführt, der daraus einen Druckauf- bzw. einen Druckabbau im Saugrohr berechnet. Das Integratorausgangssignal stellt den Saugrohrdruck dar. Von dem neu berechneten Saugrohrdruck wird dann der über Messungen im Rahmen des Applikationsvorgangs ermittelte Partialdruck des Restgases abgezogen und das Ergebnis mit einem Umrechnungsfaktor in die Luftfüllung im Brennraum umgerechnet, die dann wieder zum Vergleich mit der berechneten, ins Saugrohr fliessenden relativen Luftmasse zurückgeführt wird. Dieses sogenannte Saugrohrmodell schwingt auf einen Saugrohrdruck ein, bei welchem ein Luftmassenabgleich zwischen den oben genannten Luftmassengrößen stattfindet.

Eine wichtige Größe bei der Modellierung der physikalischen Zusammenhänge in dem Massenstromleitung ist der Druck vor der Drosselstelle. Insbesondere bei aufgeladenen Motoren kann sich dieser Druck wesentlich von dem Umgebungsdruck der Brennkraftmaschine unterscheiden, so daß eine Messung oder Abschätzung des herrschenden Druckes notwendig ist. Bei der bekannten Lösung wird daher das gemessene Eingangsluftmassensignal in ein Normluftmassensignal umgerechnet. Dieses gibt ein Maß für die während eines Segments ins Saugrohr fließenden Luftmasse an. Dieser Wert wird mit der wie oben beschrieben berechnete Luftmasse, die auf eine Normluftmasse im Brennraum bezogen ist, in Beziehung gesetzt, insbesondere wird die Abweichung zwischen den beiden Größen gebildet. Abhängig von dieser Abweichung wird von einem Integrator der Druckauf- bzw. Druckabbau im Saugrohr bestimmt. Dieser Integratorwert wird als Druck vor der Drosselklappe interpretiert. Somit wird bei der bekannten Vorgehensweise der Druck vor der Drosselklappe abgeschätzt, so dass auf eine Messung dieses Druckes verzichtet werden kann.

Durch die Verwendung eines Integrators bei der Abschätzung des Drucks vor der Drosselklappe ergeben sich unbefriedigende Zeitkonstanten, so dass Bedarf an einer Optimierung des oben skizzierten Modells insbesondere in Verbindung mit aufgeladenen Verbrennungsmotoren hinsichtlich der Modellierung des Druckwertes vor der Drosselstelle besteht.

Aus der US 4,951,647 ist es bekannt, einen Druck nach der Drosselstelle und ein Maß für den Öffnungsquerschnitt der Drosselstelle zu messen. Ferner wird der Druck vor der Drosselstelle modelliert.

### Vorteile der Erfindung

Die nachfolgend beschriebene Modellierung des Drucks vor der Drosselstelle (Drosselklappe) auf der Basis des gemessenen Druckes nach der Drosselstelle (Drosselklappe) und einem den Öffnungsquerschnitt der Drosselstelle repräsentierenden Signal (Drosselklappenstellung) wird eine Optimierung des Modells erreicht, ohne dass eine Messung des Drucks vor der Drosselstelle notwendig ist.

Besonders vorteilhaft ist, dass durch die Berechnung auch eine dynamisch richtige Modellierung des vor der Drosselstelle (im Falle einer aufgeladenen Brennkraftmaschine der Ladedruck) erreicht wird.

Insgesamt ergibt sich eine einfache, schnelle und zuverlässige Modellierung des Drucks vor der Drosselstelle, welche insbesondere in Verbindung mit aufgeladenen Verbrennungsmotoren zur Modellierung des Ladedrucks in vorteilhafter Weise einsetzbar ist.

Vorteilhaft ist ferner, dass die Modellierung des Druckes auf der Basis physikalischer Zusammenhänge basiert, so dass sie bei allen Gasmassenstromleitungen mit Drosselstelle und insbesondere mit Saugpumpe eingesetzt werden kann, bei denen der Druck vor der Drosselstelle eine relevante Größe darstellt.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert.

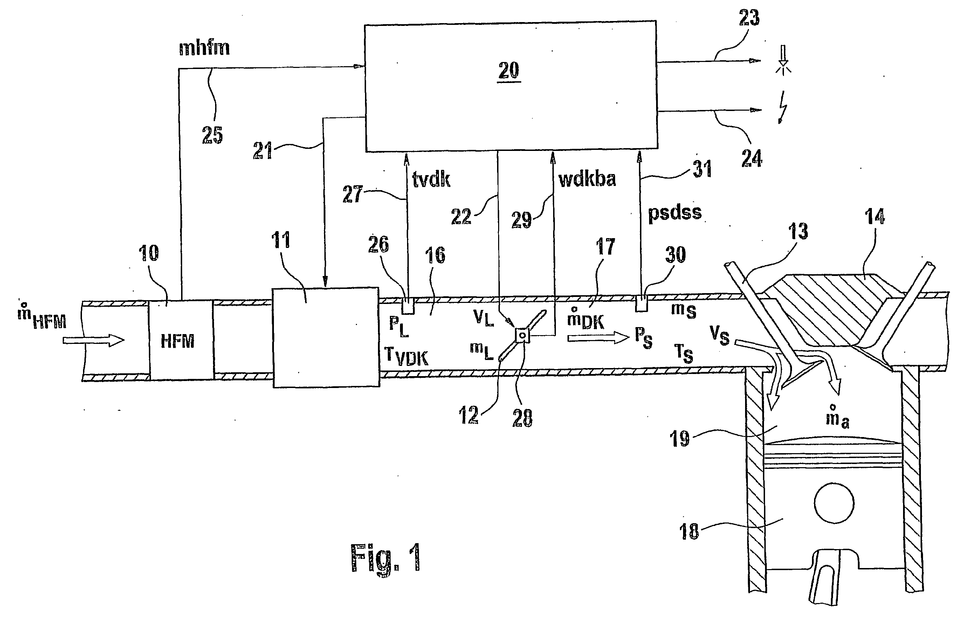

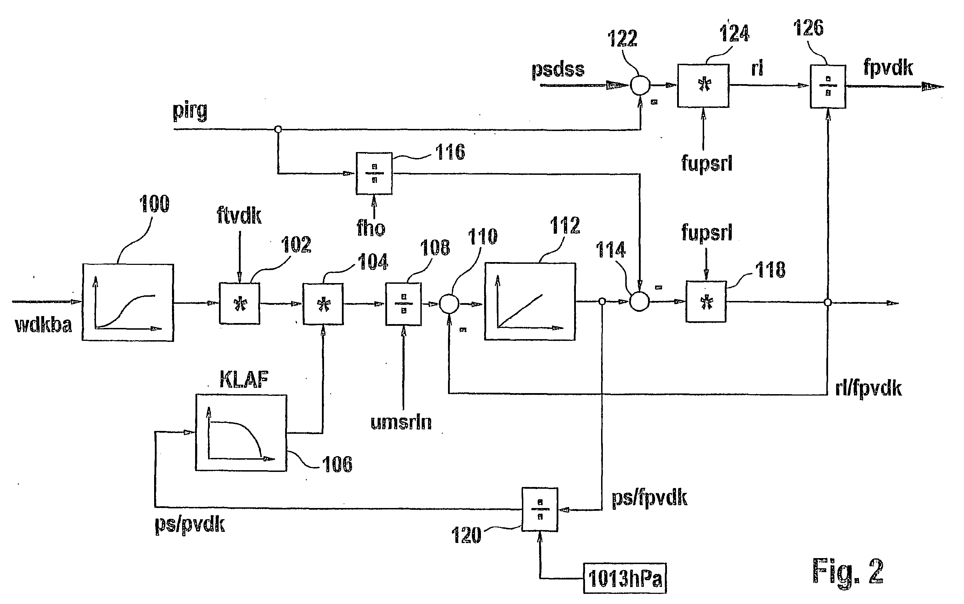

Figur 1 zeigt dabei ein Übersichtsschaubild des Ansaugsystems eines Verbrennungsmotors mit Turbolader, während in Figur 2 ein Ablaufdiagramm skizziert ist, welches die Modellierung des Drucks vor der Drosselklappe im Rahmen eines wie aus dem Stand der Technik bekannten Modells im Rahmen des bevorzugten Ausführungsbeispiels der Steuerung eines Verbrennungsmotors darstellt.

### Beschreibung von Ausführungsbeispielen

Figur 1 zeigt in grober Übersichtsdarstellung die Eingangsseite eines Verbrennungsmotors mit Turbolader. In Strömungsrichtung gesehen umfaßt das Luftansaugrohr einen Heißfilmluftmassenmesser 10 (HFM), einen Lader bzw. Verdichter 11, eine Drosselklappe 12 sowie ein Einlaßventil 13 des Verbrennungsmotors 14. Für das Verständnis der Erfindung ist ein Volumen 16 zwischen dem Lader 11 sowie der Drosselklappe und ein weiteres Volumen 17 zwischen Drosselklappe und Einlaßventil 13 wichtig. Die Brennkraftmaschine selbst besitzt pro Zylinder einen Kolben 18, dessen Tief-Stellung das Hubvolumen 19 charakterisiert. Desweiteren ist ein elektronisches Steuergerät 20 vorgesehen, welches über Ausgangsleitungen 21, 22, 23, 24 Betriebsgrößen der Brennkraftmaschine, insbesondere den Lader 11 beispielsweise im Rahmen einer Ladedruckregelung, die Drosselklappe 12 beispielsweise im Rahmen einer Lageregelung sowie Kraftstoffzumessung und Zündwinkeleinstellung steuert. Die Steuerung erfolgt in bekannter Weise auf der Basis von Eingangsgrößen, von denen in Figur 1 die durch den Luftmassenmesser gemessene Luftmasse (Eingangsleitung 25), über einen Temperatursensor 26 gemessene Ansauglufttemperatur (Eingangsleitung 27), von einem Stellungsgeber 28 gemessene Drosselklappenstellung (Eingangsleitung 29) sowie von einem Saugrohrdrucksensor 30 gemessene Druck nach der Drosselklappe (Eingangsleitung 31) dargestellt sind.

Bei der Steuerung des Verbrennungsmotors ist die tatsächlich in den Brennraum 19 geführte Luftmenge, d.h. die Zylinderfüllung pro Hub, eine wesentliche Größe. Mit Hilfe des Eingangs im Stand der Technik dargestellten Modells läßt sich diese Größe aus den vorhandenen Meßgrößen berechnen. Die Berechnung erfolgt im Rahmen eines Computerprogramms, welches im Steuergerät 12, dort in dem vorhandenen Mikrorechner, implementiert ist. Dieses Computerprogramm stellt ein Computerprogrammprodukt dar, welches bei Ablauf in einem Computer die nachfolgend dargestellten Berechnungsschritte ausführt.

Dieses Computerprogramm ist anhand des Ablaufdiagramms in Figur 2 skizziert, welches einen Teil des Modells zur Bestimmung der relativen Luftfüllung darstellt, wobei der Schwerpunkt auf die Abschätzung des Drucks vor der Drosselklappe gelegt ist. In diesem Punkt unterscheidet sich das dargestellte Modell im Rahmen des bevorzugten Ausführungsbeispiels vom eingangsgenannten, während die nachfolgenden nicht dargestellten Teile zur Berechnung der in den Brennraum geflossenen relativen Füllung der aus dem Stand der Technik bekannten Vorgehensweise entspricht. Die einzelnen Blöcke des Ablaufdiagramms der Figur 2 stellen einzelne Programme, Programmteile oder Programmschritte dar, während die Verbindungslinien zwischen den einzelnen Elementen den Informationsfluß skizzieren.

Wie aus dem eingangsgenannten Stand der Technik bekannt wird die Drosselklappenstellung wdkba eingelesen und mittels einer vorgegebenen Ventilkennlinie 100 in einen Massenstrom über der Drosselklappe umgesetzt. Im bevorzugten Ausführungsbeispiel sind diese Größen auf die Standardbedingungen von 273° Kelvin Lufttemperatur und 1013 hPa Außendruck normiert. Der auf diese Weise gebildete Massenstromwert wird in einer Multiplikationsstelle 102 mit einem Eingangssignal ftvdk korrigiert, welches abhängig von der Temperatur vor der Drosselklappe im Ansaugrohr gebildet wird und die tatsächlichen Temperaturverhältnisse berücksichtigt. Das korrigierte Massenstromsignal wird dann in einer Multiplikationsstelle 104 mit dem Ausgangssignal einer Kennlinie 106 korrigiert. Diese Kennlinie bildet den Korrekturfaktor in Abhängigkeit der Druckverhältnisse über der Drosselklappe, insbesondere des Verhältnisses zwischen Saugrohrdruck ps und dem Druck vor der Drosselklappe pvdk. Danach wird in der Verknüpfungsstelle 108 das Massenstromsignal durch den Umrechnungsfaktor umslrn, der drehzahlabhängig ist, in einen relativen Füllungswert über der Drosselklappe umgerechnet.

Die Besonderheit der in Figur 2 dargestellten Vorgehensweise gegenüber der bekannten besteht nun darin, daß anstelle eines Wertes für den Druck vor der Drosselklappe pvdk ein Normdruck, beispielsweise 1013 hPa eingesetzt wird. Der Korrekturfaktor fpvdk des Standes der Technik ist in diesem Fall 1, so daß die dort vorgenommene Korrektur wegfällt. Ergebnisse der dargestellten Berechnungen sind somit relative Füllungen, Saugrohrdrücke, etc., die auf einen Normdruck bezogen sind. Konkret heißt dies am Beispiel der Vorgehensweise der Figur 2, daß die relative Füllung über der Drosselklappe bezogen auf den Normdruck als Ausgangssignal des Elements 108 in der Verknüpfungsstelle 110 mit einem Füllungswert rl verglichen wird, welcher ebenfalls auf diesen Normdruck bezogen ist. Mathematisch dargestellt heißt dies, daß in 110 eine Größe rlroh/fpvdk mit einer Größe rl/fpvdk verglichen wird (mit fpvdk = pvdk/1013hPa). Wie aus dem Stand der Technik bekannt wird die Abweichung dieser beiden Größen im Integrator 112 integriert und auf diese Weise ein modellierter Saugrohrdruck ps gebildet, welcher ebenfalls auf den Normdruck bezogen ist (ps/fpvdk). In der Verknüpfungsstelle 114 wird dann von diesem modellierten Saugrohrdruck der durch Applikation vorgegebene Partialdruck des Restgases pirg, der in der Verknüpfungsstelle 116 gegebenenfalls meereshöhenabhängig korrigiert wird, abgezogen. Das Ergebnis der Subtraktion wird durch einen Faktor fupsrl, der in der Korrekturstelle 118 berücksichtigt wird, in einen relativen Füllungswert des Brennraums, normiert auf den Normdruck umgerechnet. Diese Größe wird auf die Vergleichsstelle 110 zurückgeführt.

Durch die Vorgabe eines Normdrucks für den Druck vor der Drosselklappe liefert also die Füllungsberechnung einen Normsaugdruck, der nur für einen Normdruck vor der Drosselklappe gilt (ps/fpvdk), bei dem der tatsächliche Druck vor der Drosselklappe nicht berücksichtigt ist.

Das Druckverhältnis über der Drosselklappe (Saugrohrdruck zu Druck vor Drosselklappe) ist Eingangsgröße zur Berechnung des Faktors der Ausflußkennlinie KLAF. Bei der Verwendung der normierten Größen (wie oben) ergibt sich dieses als Druckverhältnis vpspvdk = psnorm/pvdknorm. Am realen System herrscht über der Drosselklappe jedoch das Druckverhältnis Saugrohrdruck zu Druck vor der Drosselklappe, so daß das reale Druckverhältnis vpspvdk aus dem Quotient des Saugrohrdrucks ps und des Drucks vor der Drosselklappe pvdk zu bilden ist. Da der Saugrohrdruck ps gemessen wird, ergibt sich bei Auflösung dieses Zusammenhangs nach pvdk, dem Druck vor der Drosselklappe:
Ps/pvdk = psNorm/pvdkNorm = vpspvdk;
pvdk = ps/vpspvdk = ps * pvdkNorm/psNorm.

Auf diese Weise wird eine Modellierung des Drucks vor der Drosselklappe, bei aufgeladenen Motoren des Ladedrucks, erreicht (ps = Messgröße, pvdknorm = vorgegeben, psnorm = Ausgang 112).

Entsprechend wird im Ablaufdiagramm der Figur 2 der Normdruck psnorm (ps/fpvdk) in der Divisionsstelle 120 durch den Normdruck (1013hPa) dividiert. Ergebnis ist das tatsächliche Druckverhältnis ps/pvdk, mit welchem die Ausflußkennlinie 106 beaufschlagt wird. Eine korrekte Berücksichtigung des Druckverhältnisses über der Drosselklappe findet also trotz nicht gemessenem Druckwert statt.

Zur Bestimmung des Korrekturfaktors fpvdk, d.h. des auf den Normdruck bezogenen Drucks vor der Drosselklappe, wird der gemessenen Saugrohrdruck psdss, von dem in der Verknüpfungsstelle 122 der Restgasdruck pirg abgezogen wird, und der in der Korrekturstelle 124 durch den Korrekturfaktor fupsrl in einen relativen Füllungswert umgerechnet wird, durch Division in der Divisionsstelle 126 mit dem Ergebniswert des Saugrohrmodells rl/fpvdk (normierte relative Füllung) ausgerechnet.

Somit ergibt sich eine Modellierung des Drucks vor der Drosselklappe (Ladedruck) auf der Basis des gemessenen Saugrohrdrucks und der Drosselklappenstellung.

Da bei kleinen Druckverhältnissen die Toleranzen der auf der Drosselklappenstellung basierten Saugrohrdruckberechnung größer werden, ist es vorteilhaft, eine untere Begrenzung des modellierten Drucks vor der Drosselklappe auf den gemessenen Umgebungsdruck vorzunehmen, d.h. der modellierte Druck ist auf den Umgebungsdruck begrenzt. Statt des Umgebungsdrucks kann als untere Grenze auch der Grundladedruck verwendet werden, der in der Regel über dem Umgebungsdruck liegt und der sich ohne Eingriff der Ladedruckregelung einstellt. Dies deshalb, weil bei nur teilweise geöffneter Drosselklappe ein Gasstrom über dem Turbo den Verdichter antreibt. Dieser sorgt für eine Erhöhung des Drucks vor der Drosselklappe. Diese Grundladedruck wird bevorzugt einer vorbestimmten Kennlinie abhängig von Drosselklappenstellung und ggf. Motordrehzahl entnommen.

Kennzeichnend für das vorstehend dargestellte System ist es, daß eine Motorsteuerung mit elektrischer Steuerung der Drosselklappe und Turbolader vorgesehen ist, bei welcher kein Ladedrucksensor verbaut ist. Nach einer Manipulation des Drosselklappensignals schwingt die Ladedruckregelung auf einen anderen Ladedruck ein da der auf die vorstehende Weise gebildete Druck vor der Drosselklappe als Ladedruck der Ladedruckregelung zugrunde liegt.

Die vorstehend dargestellte Vorgehensweise beruht auf den physikalischen Zusammenhängen in der Massenstromleitung. Die geschilderte Vorgehensweise ist also nicht nur auf die Saugrohrleitung eines Verbrennungsmotors beschränkt, sondern wird überall da angewendet, wo in einer Massenstromleitung mit Saugpumpe durch eine Drosselstelle zwei Volumina abgegrenzt sind, in denen unterschiedliche Drücke herrschen. Die geschilderte Vorgehensweise erlaubt auf der Basis des gemessenen Druckes in einem Volumen sowie eines Maß für den Öffnungsquerschnitt der Drosselstelle den Druck im anderen Volumen zu modellieren.

## Patentansprüche

1. Verfahren zur Ermittlung des Drucks in einer Massenstromleitung vor einer Drosselstelle, wobei der Druck nach der Drosselstelle und ein Maß für den Öffnungsquerschnitt der Drosselstelle gemessen werden und wobei auf der Basis dieser Messgrößen der Druck vor der Drosselstelle modelliert wird, **dadurch gekennzeichnet, dass** ein physikalisches Modell vorgesehen ist, welches aus der Drosselklappenstellung einen modellierten Saugrohrdruck bestimmt, bei welchem Modell der Druck vor der Drosselklappe berücksichtigt wird, derart, dass ein Normdruck für den Druck vor der Drosselklappe vorgegebenen wird, so dass der durch das Modell ermittelte Saugrohrdruck auf diesen Normdruck bezogen ist.

2. Verfahren nach Anspruch 1, **dadurch gekennzeichnet, dass** die Massenstromleitung das Saugrohr einer aufgeladenen Brennkraftmaschine ist, während die Drosselstelle die Drosselklappe der Brennkraftmaschine ist.

3. Verfahren nach einem der vorhergehenden Ansprüche, **dadurch gekennzeichnet, dass** die Stellung der Drosselklappe gemessen wird sowie der Saugrohrdruck, d.h. der Druck im Saugrohr nach der Drosselklappe gemessen wird.

4. Verfahren nach einem der vorhergehenden Ansprüche, **dadurch gekennzeichnet, dass** aus dem gemessenen Saugrohrdruck und dem modellierten Saugrohrdruck, der auf einen Norm druck bezogen ist, auf der Basis des Druckverhältnisses über der Drosselklappe der tatsächliche Druck vor der Drosselklappe bestimmt wird.

5. Vorrichtung zur Ermittlung des Drucks in einer Massenstromleitung vor einer Drosselstelle, mit Mitteln zur Messung eines Maßes für den Öffnungsquerschnitt der Drosselstelle und für den Druck nach der Drosselstelle und mit Mitteln zur Modellierung des Druckes vor der Drosselstelle auf der Basis dieser Messwerte, **dadurch gekennzeichnet, dass** ein physikalisches Modell vorgesehen ist, welches aus der Drosselklappenstellung einen modellierten Saugrohrdruck bestimmt, bei welchem Modell der Druck vor der Drosselklappe berücksichtigt wird, derart, dass ein Normdruck für den Druck vor der Drosselklappe vorgegebenen wird, so dass der durch das Modell ermittelte Saugrohrdruck auf diesen Normdruck bezogen ist.

6. Elektronisches Steuergerät zur Steuerung eines Verbrennungsmotors, **dadurch gekennzeichnet, dass** es zur Anwendung in einem Verfahren nach einem der Ansprüche 1 bis 4 programmiert ist.

7. Computerprogrammprodukt zur Durchführung wenigstens eines der Verfahren der Ansprüche 1 bis 4, wenn das Programm auf einem Rechner abläuft.

## Claims

1. Method for determining the pressure in a mass flow line upstream from a throttle point, the pressure downstream from the throttle point and a measure of the opening cross section of the throttle point being measured and the pressure upstream from the throttle point being modelled on the basis of these measured variables, **characterized in that** a physical model is provided and determines a modelled induction pipe pressure from the throttle valve position, in which model allowance is made for the pressure upstream from the throttle point by a standard pressure being prescribed for the pressure upstream from the throttle point, so that the induction pipe pressure determined by the model is based on this standard pressure.

2. Method according to Claim 1, **characterized in that** the mass flow line is the induction pipe of a supercharged internal combustion engine, while the throttle point is the throttle valve of the engine.

3. Method according to one of the preceding claims, **characterized in that** the position of the throttle valve is measured and the induction pipe pressure, i.e. the pressure in the induction pipe, downstream from the throttle valve is measured.

4. Method according to one of the preceding claims, **characterized in that** the actual pressure upstream from the throttle valve is determined from the measured induction pipe pressure and the modelled induction pipe pressure, which is based on a standard pressure, on the basis of the pressure conditions above the throttle point.

5. Device for determining the pressure in a mass flow line upstream from a throttle point, with means for measuring a measure of the opening cross section of the throttle point and of the pressure downstream from the throttle point and with means for modelling the pressure upstream from the throttle point on the basis of these measured values, **characterized in that** a physical model is provided and determines a modelled induction pipe pressure from the throttle valve position, in which model allowance is made for the pressure upstream from the throttle point by a standard pressure being prescribed for the pressure upstream from the throttle point, so that the induction pipe pressure determined by the model is based on this standard pressure.

6. Electronic control device for controlling an internal combustion engine, **characterized in that** it is programmed for use in a method according to one of Claims 1 to 4.

7. Computer program product for carrying out at least one of the methods of Claims 1 to 4 when the program runs on a computer.

## Revendications

1. Procédé de détermination de la pression dans une conduite à débit massique en amont d'un point d'étranglement, selon lequel on mesure la pression en aval du point d'étranglement et une valeur pour la section d'ouverture du point d'étranglement, et sur la base de ces grandeurs de mesure, on modélise la pression en amont du point d'étranglement,
**caractérisé en ce qu'**
un modèle physique détermine, à partir de la position du papillon des gaz, une pression de tubulure d'admission modélisée, et le modèle tient compte de la pression en amont du papillon des gaz de façon à prédéterminer une pression standard pour la pression en amont du papillon des gaz, telle que la pression de tubulure d'admission déterminée par le modèle est rapportée à cette pression standard.

2. Procédé selon la revendication 1,
**caractérisé en ce que**
la conduite à débit massique est la tubulure d'admission d'un moteur à combustion interne chargé, tandis que le point d'étranglement est le papillon des gaz du moteur à combustion interne.

3. Procédé selon l'une des revendications précédentes,
**caractérisé en ce que**
on mesure la position du papillon des gaz ainsi que la pression de la tubulure d'admission, c'est-à-dire la pression dans la tubulure d'admission en aval du papillon des gaz.

4. Procédé selon l'une des revendications précédentes,
**caractérisé en ce qu'**
à partir de la pression de tubulure d'admission mesurée et de la pression de tubulure d'admission modélisée, rapportée à une pression standard, on détermine la pression effective en amont du papillon des gaz sur la base du rapport de pression sur le papillon des gaz.

5. Dispositif de détermination de la pression dans une conduite à débit massique en amont d'un point d'étranglement, comprenant des moyens de mesure d'une valeur pour la section d'ouverture du point d'étranglement et de la pression en aval du point d'étranglement, et comprenant des moyens de modélisation de la pression en amont du point d'étranglement sur la base de ces valeurs de mesure,
**caractérisé en ce qu'**
un modèle physique détermine, à partir de la position du papillon des gaz, une pression de tubulure d'admission modélisée, et le modèle tient compte de la pression en amont du papillon des gaz de façon à prédéterminer une pression standard pour la pression en amont du papillon des gaz, telle que la pression de tubulure d'admission déterminée par ce modèle est rapportée à cette pression standard.

6. Appareil de commande électronique pour la commande d'un moteur à combustion interne,
**caractérisé en ce qu'**
il est programmé pour une utilisation dans un procédé selon l'une des revendications 1 à 4.

7. Produit de programme informatique pour la mise en oeuvre d'au moins l'un des procédés selon les revendications 1 à 4, lorsque le programme est exécuté sur un ordinateur.
